# EUROPEAN PATENT SPECIFICATION

(11) **EP 4 131 059 B1**
(45) Date of publication and mention of the grant of the patent: **28.01.2026**
(21) Application number: 21774349.1
(22) Date of filing: 17.03.2021
(51) Int. Cl.: G06V 20/52, G06V 10/44, G06V 10/56

(54) **METHOD AND DEVICE FOR MONITORING ESCALATOR**
VERFAHREN UND VORRICHTUNG ZUR ÜBERWACHUNG EINER FAHRTREPPE
PROCÉDÉ ET DISPOSITIF DE SURVEILLANCE D'ESCALIER ROULANT

(30) Priority: 24.03.2020 CN 202010211781
(43) Date of publication of application: 08.02.2023
(73) Proprietor: KONE Corporation, 00330 Helsinki (FI)
(72) Inventor: FAN, Jinquan, Kunshan, Jiangsu 215300 (CN); CHEN, Zhong, Kunshan, Jiangsu 215300 (CN)
(74) Representative: Kolster Oy Ab
(86) International application number: PCT/CN2021/081302
(87) International publication number: WO 2021/190375

(56) References cited:
- WO-A1-2015/179696
- CN-A- 107 665 326
- CN-A- 110 188 644
- CN-A- 111 325 188
- JP-A- 2010 058 903
- JP-A- 2012 180 187

## Description

### TECHNICAL FIELD

The present disclosure relates to a method for monitoring an escalator and a device for monitoring an escalator.

### BACKGROUND

At present, the turn-on and turn-off of an escalator generally depends on the staff going to the site for inspection and manually turn-on or turn-off a button of the escalator. This leads to a large amount of labor to the staff in a place with relatively large number of escalators. Therefore, it is needed to be able to remotely monitor the escalator to determine whether there is a passenger or an object on the escalator, so as to remotely turn-on or turn-off the escalator. JP2012180187A discloses a system for detecting abnormalities on escalator steps by capturing images, and determining blockages based on whether a single step remains blocked across multiple captured images.

### SUMMARY

Therefore, the present disclosure provides a method for remotely monitoring an escalator, which includes: capturing an image of an escalator by a camera, wherein each step of the escalator is provided with a pattern with a predetermined color, and a color of the pattern is different from a color of steps of the escalator; performing a grayscale treatment to the image as captured; covering a background of the image being subjected to the grayscale treatment and separating the pattern; identifying an outline of the pattern; comparing the outline of the pattern with a pre-stored outline of the pattern, and determining whether the pattern on the step of the escalator is blocked according to a comparison result, wherein the pre-stored outline of the pattern is a non-blocked outline of the pattern.

Upon the comparison result showing that the outline of the pattern as identified is different from the pre-stored outline of the pattern, it is determined that the pattern on the step of the escalator is blocked.

A case that the outline of the pattern as identified is different from the pre-stored outline of the pattern comprises a case that a number of non-blocked patterns is less than a pre-stored number of non-blocked patterns.

Preferably, upon the comparison result showing that the outline of the pattern as identified is the same as the pre-stored outline of the pattern, it is determined that the pattern on the step of the escalator is not blocked.

Preferably, a case that the outline of the pattern as identified is the same as the pre-stored outline of the pattern comprises a case that a number of non-blocked patterns is equal to a pre-stored number of non-blocked patterns.

Preferably, the pattern is arranged on a tread and/or a riser of each step of the escalator.

Preferably, the pattern is an oval pattern arranged at a center of the tread and/or the riser of each step of the escalator.

Preferably, the pattern is a boundary line arranged at a periphery of the tread and/or the riser of each step of the escalator.

The present disclosure further provides a device for remotely monitoring an escalator, which includes: a camera, configured for capturing an image of an escalator, wherein each step of the escalator is provided with a pattern with a predetermined color, and a color of the pattern is different from a color of steps of the escalator; a graying module, configured for performing a grayscale treatment to the image as captured; a separation module, configured for covering a background of the image being subjected to the grayscale treatment and separating the pattern; an identification module, configured for identifying an outline of the pattern; a processing module, configured for comparing the outline of the pattern with a pre-stored outline of the pattern, and determining whether the pattern on the step of the escalator is blocked according to a comparison result, wherein the pre-stored outline of the pattern is a non-blocked outline of the pattern.

Upon the comparison result showing that the outline of the pattern as identified is different from the pre-stored outline of the pattern, it is determined that the pattern on the step of the escalator is blocked.

A case that the outline of the pattern as identified is different from the pre-stored outline of the pattern comprises a case that a number of non-blocked patterns is less than a pre-stored number of non-blocked patterns.

Preferably, upon the comparison result showing that the outline of the pattern as identified is the same as the pre-stored outline of the pattern, it is determined that the pattern on the step of the escalator is not blocked.

Preferably, a case that the outline of the pattern as identified is the same as the pre-stored outline of the pattern comprises a case that a number of non-blocked patterns is equal to a pre-stored number of non-blocked patterns.

Preferably, the pattern is arranged on a tread and/or a riser of each step of the escalator.

Preferably, the pattern is an oval pattern arranged at a center of the tread and/or the riser of each step of the escalator.

Preferably, the pattern is a boundary line arranged at a periphery of the tread and/or the riser of each step of the escalator .

### BRIEF DESCRIPTION OF THE DRAWINGS

The advantages and objects of the present disclosure can be better understood from the following detailed description of the preferred embodiments of the present disclosure with reference to the accompanying drawings, in which:
FIG. 1 shows a flowchart of a method for monitoring an escalator according to the present disclosure.
FIG. 2(a) shows a pattern of a predetermined color provided on a step of an escalator.
FIG. 2(b) shows another pattern of a predetermined color provided on a step of an escalator.
FIG. 2(c) shows yet another pattern of a predetermined color provided on a step of an escalator.
FIG. 3 shows a schematic diagram of a pre-stored outline of an oval pattern.
FIG. 4 shows a schematic diagram of an image of an escalator captured by a camera.
FIG. 5 shows an outline of an oval pattern identified by the method of the present disclosure.
FIG. 6 shows a schematic diagram of a pre-stored outline of a boundary line pattern.
FIG. 7 shows a schematic diagram of an image of an escalator captured by a camera.
FIG. 8 shows an outline of the boundary line pattern identified by the method of the present disclosure.

### DETAILED DESCRIPTION

Various embodiments according to the present disclosure will be described in detail with reference to the accompanying drawings. Herein, it should be noted that in the drawings, the same reference numerals are given to constituent parts that basically have the same or similar structure and function, and repeated descriptions about them will be omitted. Unless otherwise specified, the terms "on", "below", "top", "bottom", "inner side" and "outer side" are all described with respect to the drawings of the present disclosure. The term "includes A, B, C, etc. in sequence" only indicates the sequence of the included components A, B, C, etc., and does not exclude the possibility of including other components between A and B and/or between B and C.

The inventive concept of the present disclosure is to determine whether there is a passenger or other object on the step of the escalator by remotely monitoring the escalator, so as to remotely turn-on or turn-off the escalator.

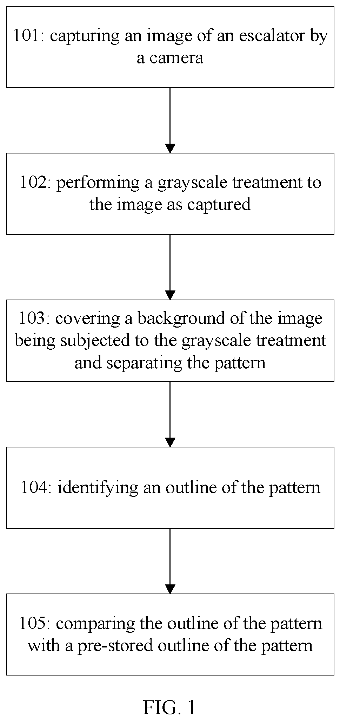

Hereinafter, referring to FIGS. 1 to 8, preferred embodiments according to the present disclosure are described in detail.

As illustrated by FIG. 1, a flowchart of a method for remotely monitoring an escalator according to the present disclosure is shown. In step 101, an image of an escalator is captured by a camera. The camera is configured that its field of view covers the whole escalator to capture the image of the whole escalator. One camera can be provided to capture the image of the whole escalator, or multiple cameras can be provided to capture the image of the escalator. In the case of multiple cameras, the images captured by multiple cameras are combined to form the image of the whole escalator.

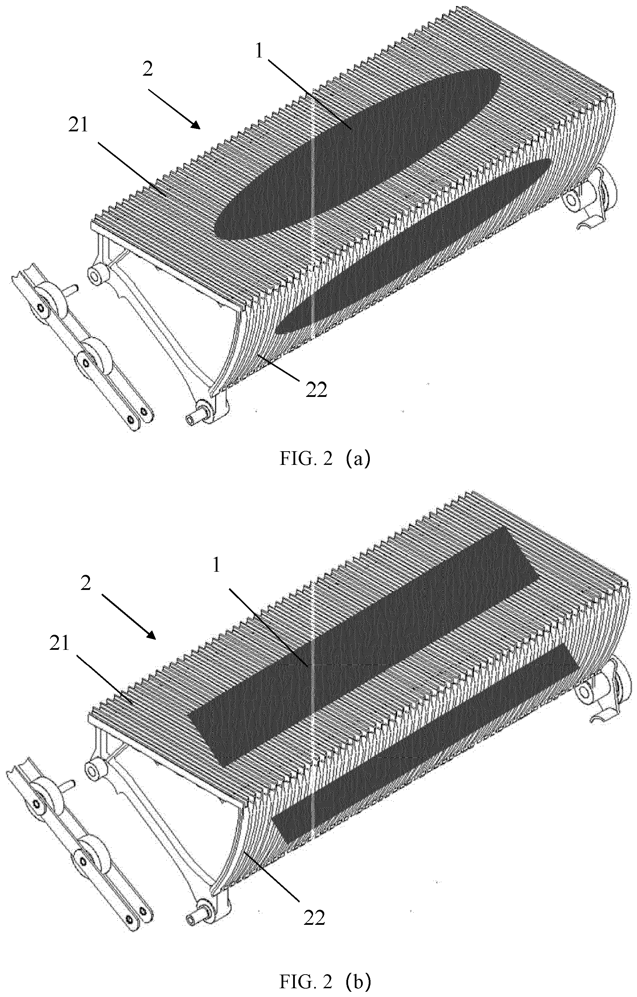

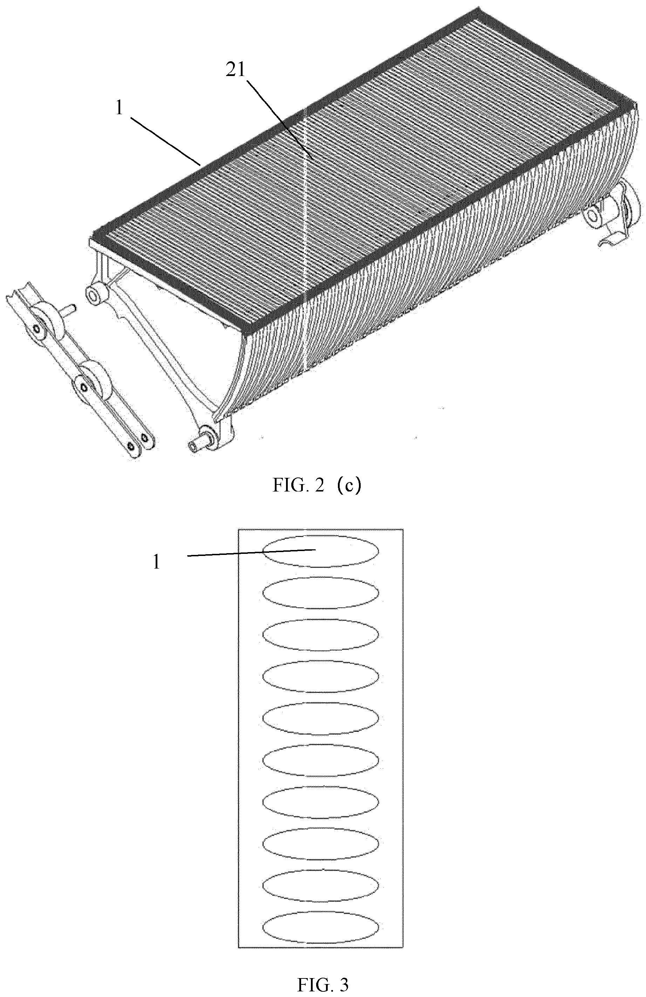

A pattern 1 with a predetermined color is provided on each step 2 of the escalator, preferably on a tread 21 and/or a riser 22 of each step. As illustrated by FIGS. 2(a) to 2(c), an oval pattern or a square pattern is arranged at the center of the tread and/or riser, and a pattern in a form of a boundary line is arranged at the periphery of the tread and/or riser. It should be understood by those skilled in the art that other arbitrary patterns can be used as long as the purpose of the present disclosure can be achieved. The colors of these patterns are different from the color of the steps of the escalator, so that these patterns can be distinguished in the subsequent processing.

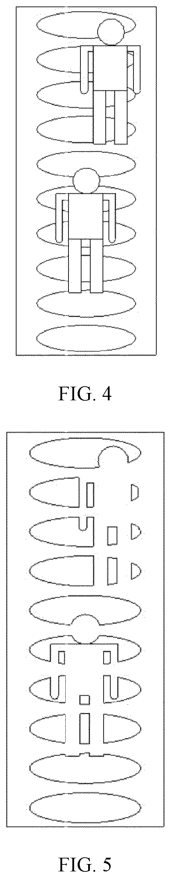

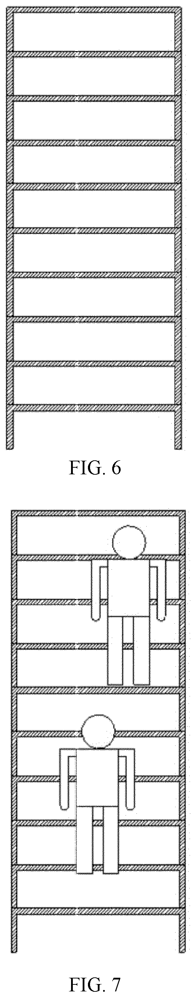

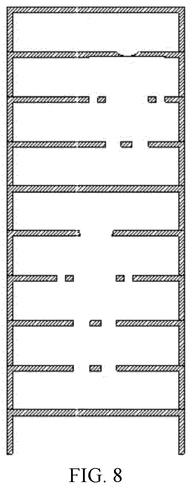

Next, in step 102, the image as captured is subjected to a grayscale treatment, so as to remove the color interference for subsequent processing, as illustrated by FIGS. 4 and 7, for example. In step 103, the background of the image being subjected to the grayscale treatment is covered to separate the pattern. In step 104, an outline of the pattern is identified, as illustrated by FIGS. 5 and 8, for example. The above image processing can use an HSV-based image processing method, which is well known to those skilled in the art and will not be described here again.

Finally, in step 105, the outline of the pattern as identified is compared with a pre-stored outline of the pattern. Based on the comparison result, it is determined whether the pattern on the step of the escalator is blocked. The pre-stored outline of the pattern is shown in FIGS. 3 and 6.

If the comparison result shows that the recognized pattern outline is different from the pre-stored outline of the pattern, then it is determined that the pattern on the step of the escalator is blocked, so that it is determined that there is a passenger or an object on the escalator. In this case, the escalator will not be remotely turned-on or turned-off. For example, if a number of non-blocked patterns is less than a pre-stored number of non-blocked patterns, it indicates that some patterns are blocked. If the comparison result shows that the comparison result showing that the outline of the pattern as identified is the same as the pre-stored outline of the pattern, it is determined that the pattern on the step of the escalator is not blocked, so that there are no passengers or objects on the escalator, and then the escalator can be turned-on or turned-off remotely. For example, the number of non-blocked patterns is equal to the pre-stored number of non-blocked patterns, which indicates that no pattern is blocked.

The present disclosure also provides a device for remotely monitoring an escalator, which includes a camera, configured for capturing an image of an escalator; a graying module, configured for performing a grayscale treatment to the image as captured; a separation module, configured for covering a background of the image being subjected to the grayscale treatment and separating the pattern; an identification module, configured for identifying an outline of the pattern; a processing module, configured for comparing the outline of the pattern with a pre-stored outline of the pattern, and determining whether the pattern on the step of the escalator is blocked according to a comparison result.

Through the method and device for remotely monitoring an escalator of the present disclosure, it is possible to conveniently and reliably determine whether there is a passenger or an object on the escalator, so as to remotely turn-on or turn-off the escalator, for example, turning-on the escalator in the morning and turning-off the escalator at night, without the staff spending too much labor.

Although the present disclosure has been specifically described above with reference to the preferred embodiments of the present disclosure, it should be understood that the present disclosure is not limited to the above-described embodiments, but various modifications and changes can be made by those skilled in the art without departing from the scope defined by the appended claims .

## Claims

1. A method for remotely monitoring an escalator, which is **characterized in that** the method comprises:
capturing an image of an escalator by a camera, wherein each step of the escalator is provided with a pattern with a predetermined color, and a color of the pattern is different from a color of steps of the escalator;
performing a grayscale treatment to the captured image;
covering a background of the image being subjected to the grayscale treatment and separating the pattern;
identifying an outline of the pattern;
comparing the outline of the pattern with a pre-stored outline of the pattern, and determining whether the pattern on the step of the escalator is blocked according to a comparison result, wherein the pre-stored outline of the pattern is a non-blocked outline of the pattern,
upon the comparison result showing that the outline of the pattern as identified is different from the pre-stored outline of the pattern, it is determined that the pattern on the step of the escalator is blocked, and
a case that the outline of the pattern as identified is different from the pre-stored outline of the pattern comprises a case that a number of non-blocked patterns is less than a pre-stored number of non-blocked patterns.

2. The method according to claim 1, which is **characterized in that**, upon the comparison result showing that the outline of the pattern as identified is the same as the pre-stored outline of the pattern, it is determined that the pattern on the step of the escalator is not blocked.

3. The method according to claim 2, which is **characterized in that**, a case that the outline of the pattern as identified is the same as the pre-stored outline of the pattern comprises a case that a number of non-blocked patterns is equal to a pre-stored number of non-blocked patterns.

4. The method according to claim 1, which is **characterized in that**, the pattern is arranged on a tread and/or a riser of each step of the escalator.

5. The method according to claim 4, which is **characterized in that**, the pattern is one of an oval pattern arranged at a center of the tread and/or the riser of each step of the escalator and a boundary line arranged at a periphery of the tread and/or the riser of each step of the escalator.

6. A device for remotely monitoring an escalator, which is **characterized in that**, the device comprises:
a camera, configured for capturing an image of an escalator, wherein each step of the escalator is provided with a pattern with a predetermined color, and a color of the pattern is different from a color of steps of the escalator;
a graying module, configured for performing a grayscale treatment to the captured image;
a separation module, configured for covering a background of the image being subjected to the grayscale treatment and separating the pattern;
an identification module, configured for identifying an outline of the pattern;
a processing module, configured for comparing the outline of the pattern with a pre-stored outline of the pattern, and determining whether the pattern on the step of the escalator is blocked according to a comparison result, wherein the pre-stored outline of the pattern is a non-blocked outline of the pattern,
upon the comparison result showing that the outline of the pattern as identified is different from the pre-stored outline of the pattern, it is determined that the pattern on the step of the escalator is blocked, and
a case that the outline of the pattern as identified is different from the pre-stored outline of the pattern comprises a case that a number of non-blocked patterns is less than a pre-stored number of non-blocked patterns.

7. The device according to claim 6, which is **characterized in that**, upon the comparison result showing that the outline of the pattern as identified is the same as the pre-stored outline of the pattern, it is determined that the pattern on the step of the escalator is not blocked.

8. The device according to claim 7, which is **characterized in that**, a case that the outline of the pattern as identified is the same as the pre-stored outline of the pattern comprises a case that a number of non-blocked patterns is equal to a pre-stored number of non-blocked patterns.

9. The device according to claim 6, which is **characterized in that**, the pattern is arranged on a tread and/or a riser of each step of the escalator.

10. The device according to claim 9, which is **characterized in that**, the pattern is one of an oval pattern arranged at a center of the tread and/or the riser of each step of the escalator and a boundary line arranged at a periphery of the tread and/or the riser of each step of the escalator.

## Patentansprüche

1. Verfahren zum entfernten Überwachen einer Fahrtreppe, das **dadurch gekennzeichnet ist, dass** das Verfahren Folgendes umfasst:
Erfassen eines Bildes einer Fahrtreppe mit einer Kamera, wobei jede Stufe der Fahrtreppe mit einem Muster mit einer vorbestimmten Farbe versehen ist, und eine Farbe des Musters sich von einer Farbe von Stufen der Fahrtreppe unterscheidet;
Durchführen einer Grauskalenbehandlung des erfassten Bildes;
Abdecken eines Hintergrunds des Bildes, das der Grauskalenbehandlung unterzogen wurde, und Trennen des Musters;
Identifizieren einer Umrisslinie des Musters;
Vergleichen der Umrisslinie des Musters mit einer vorab gespeicherten Umrisslinie des Musters, und Bestimmen, ob das Muster auf der Stufe der Fahrtreppe gemäß einem Vergleichsergebnis blockiert ist, wobei die vorab gespeicherte Umrisslinie des Musters eine nicht blockierte Umrisslinie des Musters ist,
nachdem das Vergleichsergebnis zeigt, dass sich die Umrisslinie des Musters wie identifiziert von der vorab gespeicherten Umrisslinie des Musters unterscheidet, wird bestimmt, dass das Muster der Stufe der Fahrtreppe blockiert ist, und
ein Fall, in dem sich die Umrisslinie des Musters wie identifiziert von der vorab gespeicherten Umrisslinie des Musters unterscheidet, umfasst einen Fall, in dem eine Anzahl von nicht blockierten Mustern kleiner ist als eine vorab gespeicherte Anzahl von nicht blockierten Mustern.

2. Verfahren nach Anspruch 1, das **dadurch gekennzeichnet ist, dass**, nachdem das Vergleichsergebnis zeigt, dass die Umrisslinie des Musters wie identifiziert dieselbe ist wie die vorab gespeicherte Umrisslinie des Musters, bestimmt wird, dass das Muster der Stufe der Fahrtreppe nicht blockiert ist.

3. Verfahren nach Anspruch 2, das **dadurch gekennzeichnet ist, dass** ein Fall, in dem die Umrisslinie des Musters wie identifiziert dieselbe ist wie die vorab gespeicherte Umrisslinie des Musters, einen Fall umfasst, in dem eine Anzahl von nicht blockierten Mustern gleich einer vorab gespeicherten Anzahl von nicht blockierten Mustern ist.

4. Verfahren nach Anspruch 1, das **dadurch gekennzeichnet ist, dass** das Muster auf einer Trittstufe und/oder einer Setzstufe jeder Stufe der Fahrtreppe angeordnet ist.

5. Verfahren nach Anspruch 4, das **dadurch gekennzeichnet ist, dass** das Muster eines von einem ovalen Muster, das in einer Mitte der Trittstufe und/oder der Setzstufe jeder Stufe der Fahrtreppe angeordnet ist, und einer Begrenzungslinie ist, die an einer Peripherie der Trittstufe und/oder der Setzstufe von jeder Stufe der Fahrtreppe angeordnet ist.

6. Vorrichtung zum entfernten Überwachen einer Fahrtreppe, die **dadurch gekennzeichnet ist, dass** die Vorrichtung Folgendes umfasst:
eine Kamera, die zum Erfassen eines Bildes einer Fahrtreppe ausgelegt ist, wobei jede Stufe der Fahrtreppe mit einem Muster mit einer vorbestimmten Farbe versehen ist, und eine Farbe des Musters sich von einer Farbe von Stufen der Fahrtreppe unterscheidet;
ein Eingrauungsmodul, das zum Durchführen einer Grauskalenbehandlung des erfassten Bildes ausgelegt ist;
ein Trennungsmodul, das zum Abdecken eines Hintergrunds des Bildes, das der Grauskalenbehandlung unterzogen wurde, und Trennen des Musters ausgelegt ist;
ein Identifikationsmodul, das zum Identifizieren einer Umrisslinie des Musters ausgelegt ist;
ein Verarbeitungsmodul, das zum Vergleichen der Umrisslinie des Musters mit einer vorab gespeicherten Umrisslinie des Musters, und Bestimmen, ob das Muster auf der Stufe der Fahrtreppe gemäß einem Vergleichsergebnis blockiert ist, ausgelegt ist, wobei die vorab gespeicherte Umrisslinie des Musters eine nicht blockierte Umrisslinie des Musters ist,
nachdem das Vergleichsergebnis zeigt, dass sich die Umrisslinie des Musters wie identifiziert von der vorab gespeicherten Umrisslinie des Musters unterscheidet, wird bestimmt, dass das Muster der Stufe der Fahrtreppe blockiert ist, und
ein Fall, in dem sich die Umrisslinie des Musters wie identifiziert von der vorab gespeicherten Umrisslinie des Musters unterscheidet, umfasst einen Fall, in dem eine Anzahl von nicht blockierten Mustern kleiner ist als eine vorab gespeicherte Anzahl von nicht blockierten Mustern.

7. Vorrichtung nach Anspruch 6, die **dadurch gekennzeichnet ist, dass**, nachdem das Vergleichsergebnis zeigt, dass die Umrisslinie des Musters wie identifiziert dieselbe ist wie die vorab gespeicherte Umrisslinie des Musters, bestimmt wird, dass das Muster der Stufe der Fahrtreppe nicht blockiert ist.

8. Vorrichtung nach Anspruch 7, die **dadurch gekennzeichnet ist, dass** ein Fall, in dem die Umrisslinie des Musters wie identifiziert dieselbe ist wie die vorab gespeicherte Umrisslinie des Musters, einen Fall umfasst, in dem eine Anzahl von nicht blockierten Mustern gleich einer vorab gespeicherten Anzahl von nicht blockierten Mustern ist.

9. Vorrichtung nach Anspruch 6, die **dadurch gekennzeichnet ist, dass** das Muster auf einer Trittstufe und/oder einer Setzstufe jeder Stufe der Fahrtreppe angeordnet ist.

10. Vorrichtung nach Anspruch 9, die **dadurch gekennzeichnet ist, dass** das Muster eines von einem ovalen Muster, das in einer Mitte der Trittstufe und/oder der Setzstufe jeder Stufe der Fahrtreppe angeordnet ist, und einer Begrenzungslinie ist, die an einer Peripherie der Trittstufe und/oder der Setzstufe von jeder Stufe der Fahrtreppe angeordnet ist.

## Revendications

1. Procédé de surveillance à distance d'un escalier roulant, **caractérisé en ce que** le procédé comprend les étapes suivantes :
capturer une image d'un escalier roulant par une caméra, dans lequel chaque marche de l'escalier roulant est pourvue d'un motif d'une couleur prédéterminée, et une couleur du motif est différente d'une couleur des marches de l'escalier roulant ;
effectuer un traitement en niveaux de gris sur l'image capturée ;
couvrir un arrière-plan de l'image qui est soumise au traitement en niveaux de gris et séparer le motif ;
identifier un contour du motif ;
comparer le contour du motif avec un contour pré-stocké du motif, et déterminer si le motif sur la marche de l'escalier roulant est bloqué selon un résultat de comparaison, dans lequel le contour pré-stocké du motif est un contour non bloqué du motif,
si le résultat de comparaison montre que le contour du motif identifié est différent du contour pré-stocké du motif, il est déterminé que le motif sur la marche de l'escalier roulant est bloqué, et
le cas où le contour du motif identifié est différent du contour pré-stocké du motif comprend le cas où un nombre de motifs non bloqués est inférieur à un nombre de motifs non bloqués pré-stockés.

2. Procédé selon la revendication 1, **caractérisé en ce qu'**il est déterminé, si le résultat de comparaison montre que le contour du motif identifié est le même que le contour pré-stocké du motif, que le motif sur la marche de l'escalier roulant n'est pas bloqué.

3. Procédé selon la revendication 2, **caractérisé en ce que** le cas où le contour du motif identifié est le même que le contour pré-stocké du motif comprend le cas où un nombre de motifs non bloqués est égal à un nombre de motifs non bloqués pré-stockés.

4. Procédé selon la revendication 1, **caractérisé en ce que** le motif est agencé sur un giron et/ou une contremarche de chaque marche de l'escalier roulant.

5. Procédé selon la revendication 4, **caractérisé en ce que** le motif est un parmi un motif ovale agencé à un centre du giron et/ou la contremarche de chaque marche de l'escalier roulant et une ligne de démarcation agencée à une périphérie du giron et/ou de la contremarche de chaque marche de l'escalier roulant.

6. Dispositif de surveillance à distance d'un escalier roulant, **caractérisé en ce que** le dispositif comprend :
une caméra configurée pour capturer une image d'un escalier roulant, dans lequel chaque marche de l'escalier roulant est pourvue d'un motif d'une couleur prédéterminée, et une couleur du motif est différente d'une couleur des marches de l'escalier roulant ;
un module de mise en gris configuré pour effectuer un traitement en niveaux de gris sur l'image capturée ;
un module de séparation configuré pour couvrir un arrière-plan de l'image qui est soumise au traitement en niveaux de gris et séparer le motif ;
un module d'identification configuré pour identifier un contour du motif ;
un module de traitement configuré pour comparer le contour du motif avec un contour pré-stocké du motif, et déterminer si le motif sur la marche de l'escalier roulant est bloqué selon un résultat de comparaison, dans lequel le contour pré-stocké du motif est un contour non bloqué du motif,
si le résultat de comparaison montre que le contour du motif identifié est différent du contour pré-stocké du motif, il est déterminé que le motif sur la marche de l'escalier roulant est bloqué, et
le cas où le contour du motif identifié est différent du contour pré-stocké du motif comprend le cas où un nombre de motifs non bloqués est inférieur à un nombre de motifs non bloqués pré-stockés.

7. Dispositif selon la revendication 6, **caractérisé en ce qu'**il est déterminé, si le résultat de comparaison montre que le contour du motif identifié est le même que le contour pré-stocké du motif, que le motif sur la marche de l'escalier roulant n'est pas bloqué.

8. Dispositif selon la revendication 7, **caractérisé en ce que** le cas où le contour du motif identifié est le même que le contour pré-stocké du motif comprend le cas où un nombre de motifs non bloqués est égal à un nombre de motifs non bloqués pré-stockés.

9. Dispositif selon la revendication 6, **caractérisé en ce que** le motif est agencé sur un giron et/ou une contremarche de chaque marche de l'escalier roulant.

10. Dispositif selon la revendication 9, **caractérisé en ce que** le motif est un parmi un motif ovale agencé à un centre du giron et/ou la contremarche de chaque marche de l'escalier roulant et une ligne de démarcation agencée à une périphérie du giron et/ou de la contremarche de chaque marche de l'escalier roulant.
